# EUROPEAN PATENT APPLICATION

(11) **EP 4 455 971 A1**
(43) Date of publication of application: **30.10.2024**
(21) Application number: 23315126.5
(22) Date of filing: 27.04.2023
(51) Int. Cl.: G06Q 20/32

(54) **A METHOD FOR SELECTING A VIRTUAL CARD AMONG TWO VIRTUAL CARDS COMPRISED IN A SECURE ELEMENT COOPERATING WITH A TERMINAL AND CORRESPONDING SECURE ELEMENT**

(71) Applicant: THALES DIS FRANCE SAS, 92190 Meudon (FR)
(72) Inventor: Dany, Vincent, 13400 AUBAGNE (FR); Ahmed, Naveed, 13705 LA CIOTAT (FR); Chen, Haiyun, 13705 LA CIOTAT (FR)
(74) Representative: Scheer, Luc

(57) **Abstract**

The invention concerns a method for selecting a virtual card among two virtual cards comprised in a secure element cooperating with a terminal, a first of the virtual cards being compliant with ISO 14443-3 and the second virtual card being compliant with ISO 14443-3 and ISO 14443-4, the secure element communicating with a NFC, Near Field Communication, reader through a CLF, Contactless Frontend, comprised in the terminal, the method comprising:
- activating the first and second virtual cards by the secure element;
- provisioning by the secure element the CLF with the UID, Unique Identifier, of the first virtual card;
- provisioning by the secure element the CLF with the default parameters of the second virtual card, according to Amendment C of GlobalPlatform Card Specification and ETSI 102.613;
- if the CLF detects that the communication protocol used by the NFC reader is compliant with ISO 1443-3 but not compliant with ISO 14443-4, switching the CLF to the UID of the first virtual card, in order to establish a communication between the first virtual card and the NFC reader;

if the CLF detects that the communication protocol used by the NFC reader is compliant with ISO 1443-3 and compliant with ISO 14443-4, keeping the default parameters of the second virtual card in the CLF, in order to establish a communication between the second virtual card and the NFC reader.

## Description

The domain of the invention is telecommunications and more precisely the choice of a virtual card cooperating with a terminal to communicate through NFC (Near Field Communication) with a reader.

The virtual card can be integrated in an embedded UICC (eUICC), a plastic card (SIM card) or a iUICC (Integrated UICC). Generally speaking, the virtual card is integrated in a secure element. The secure element, like a eSE (embedded Secure Element), cooperates with a terminal, in a 3G-4G-5G or future network. The terminal is typically a smartphone, an loT (Internet of Things) device, a mobile phone, a PDA (Personal Digital Assistant),...

The goal of the invention is to solve a problem that is related to the fact that when several virtual cards are present in a secure element, it is necessary to select the virtual card that has to be activated, in view of the terminal with which the virtual card has to communicate (transit application reader, an application in a reader for opening a door, or a payment terminal for example).

In fact, it is linked to a problem that is that the UID (Unique Identifier) of the virtual card was foreseen only to serve to Anti Collision according to Amendment C of GlobalPlatform Card Specification (for example as described in GlobalPlatform Technology Contactless Services Card Specification v2.3 - Amendment C Version 1.3 Public Release July 2019).

This means that when there are two (or more) different cards that are virtualized in the terminal, the terminal must have to present one UID according to the card that is activated and corresponding to the reader to which it is presented.

And so that's a problem of selecting the correct card by the user before realizing the NFC transaction operation. It is not at all convenient for the user because he has to select the correct card manually.

There exist solutions that are GPS based: The correct card is automatically selected by the mobile terminal in view of the physical position of the user.

But this has a lot of disadvantages. The first one is the need to have GPS activated on the mobile terminal, which is not always the case and to have coverage, which does not work well when the user is in the subway for example.

It can also generate privacy problems.

It can also be ineffective in the Internet of Things (IoT) domain when using maps and where two loT devices are too close and therefore the accuracy of the GPS does not allow choosing between the two devices.

So, there is a problem since only one virtual card can be selected at a given moment by default and this one is not always the one to be activated.

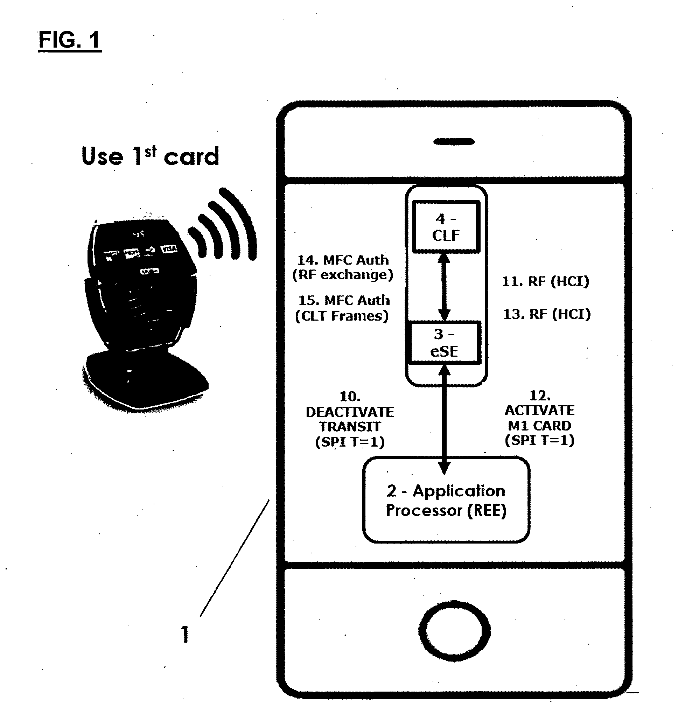

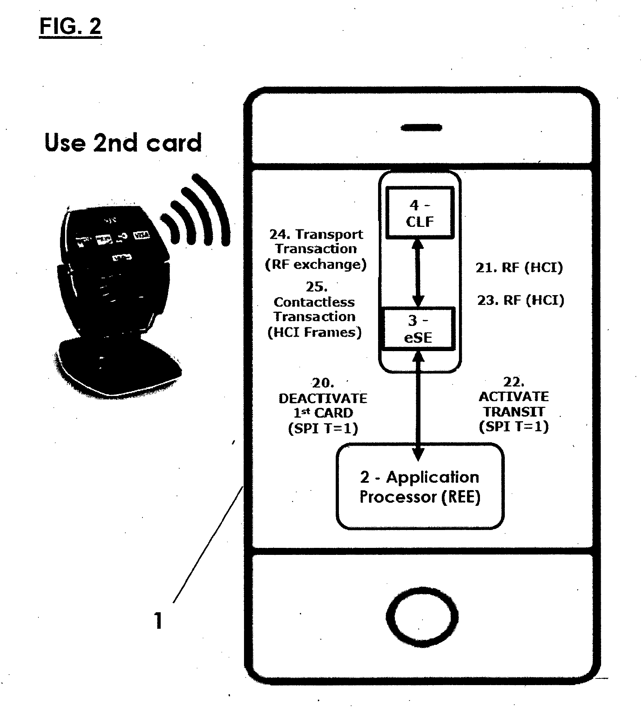

So the problem to be solved, is this switch of virtual cards and in addition there is another problem today: in the architecture as defined in the standard with secure elements or a map, the contactless data are in the secure element cooperating with the terminal (eSE, Sim card, eUICC or iUICC) and they are transferred with many exchanges. This is represented in figure 1.

In this figure, a terminal 1 (here a smartphone) comprises an application processor 2, a secure element 3 and a CLF 4. The application processor 2 communicates with the secure element 3 and the secure element 3 communicates with the CLF 4. The terminal 1 is approached to a NFC reader 5 by a user in order to realise a transaction (payment, transportation, cash withdrawal,...).

The secure element 3 comprises at least two virtual cards:
- a first virtual card being compliant with ISO 14443-3 and not compliant with ISO 14443-4, for example a Mifare virtual card;
- a second virtual card being compliant with ISO 14443-3 and ISO 14443-4, for example a transit card.

The first virtual card is typically a Mifare virtual card (for transportation, access, coffee machines,...) and the second virtual card can be a transit card or a banking card for example. Both virtual cards cannot be activated at the same time due to collision and conflict detection. To activate first virtual card, user needs to perform the following steps:
- Deactivation of the second virtual card which triggers the following:
   ∘ Exchange of JCRE APDUs over the interface from the application processor 2 to the secure element 3, typically over SPI interface in the secure element 3
      ▪ SELECT CRS (an application with contactless activation privilege)
      ▪ DEACTIVATE TRANSITCARD_AID
   ∘ This leads to exchange of RF parameters from the secure element 3 to the CLF 4 over the SWP interface as defined in ETSI TS 102622. A chain of SET PARAMETER consisting of HCI registry data (RF Technology Type A or Type B) is transmitted.
- Activation of the first virtual card which triggers the following:
   ∘ Exchange of JCRE APDUs over the interface from the application processor 2 to the secure element 3, typically over SPI interface in the secure element 3.
      ▪ SELECT CRS (an application with contactless activation privilege)
      ▪ ACTIVATE MIFARECARD_AID
   ∘ This leads to exchange of new RF parameters from secure element 3 to CLF 4 over SWP interface as defined in ETSI TS 102622. The chain of SET PARAMETER consisting of HCI registry data (RF Technology Type A or Type B) is transmitted.

To activate second virtual card, the user needs to perform the following steps:
- Deactivation of the first virtual card which triggers the following:
   ∘ Exchange of JCRE APDUs over the interface from the application processor 2 to the secure element 3, typically over SPI interface in the secure element 3.
      ▪ SELECT CRS (an application with contactless activation privilege)
      ▪ DEACTIVATE MIFARECARD _AID
   ∘ This leads to exchange of RF parameters from secure element 3 to the CLF 4 over the SWP interface as defined in ETSI TS 102622. A chain of SET PARAMETER consisting of HCI registry data (RF Technology Type A or Type B) is transmitted.
- Activation of the second virtual card which triggers the following:
   ∘ Exchange of JCRE APDUs over the interface from the application processor 2 to the secure element 3, typically over SPI interface in the secure element 3.
      ▪ SELECT CRS (an application with contactless activation privilege)
      ▪ ACTIVATE TRANSITCARD*_*AID
   ∘ This leads to exchange of new RF parameters from secure element 3 to the CLF 4 over SWP interface as defined in ETSI TS 102622. The chain of SET PARAMETER consisting of HCI registry data (RF Technology Type A or Type B) is transmitted.

The problem is that these multiple exchanges take time and the result is that the establishments of the transactions are slow. There are a lot of operations to switch from one virtual card to another because the user has to select in his mobile terminal the correct application (virtual card).

The present invention proposes a solution to these problems.

More precisely, the invention proposes a method for selecting a virtual card among two virtual cards comprised in a secure element cooperating with a terminal, a first of the virtual cards being compliant with ISO 14443-3 and the second virtual card being compliant with ISO 14443-3 and ISO 14443-4, the secure element communicating with a NFC, Near Field Communication, reader through a CLF, Contactless Frontend, comprised in the terminal, the method comprising:
activating the first and second virtual cards by the secure element;
   - provisioning by the secure element the CLF with the UID, Unique Identifier, of the first virtual card;
   - provisioning by the secure element the CLF with the default parameters of the second virtual card, according to Amendment C of GlobalPlatform Card Specification and ETSI 102.613;
   - if the CLF detects that the communication protocol used by the NFC reader is compliant with ISO 1443-3 but not compliant with ISO 14443-4, switching the CLF to the UID of the first virtual card, in order to establish a communication between the first virtual card and the NFC reader;
   - if the CLF detects that the communication protocol used by the NFC reader is compliant with ISO 1443-3 and compliant with ISO 14443-4, keeping the default parameters of the second virtual card in the CLF, in order to establish a communication between the second virtual card and the NFC reader.

Preferably, the secure element is one of:
- a Sim card,
- a UICC,
- an eUICC,
- an iUICC,
- an eSE.

The invention also concerns a secure element cooperating with a terminal, the secure element comprising two virtual cards, a first of the virtual cards compliant with ISO 14443-3 and a second virtual card being compliant with ISO 14443-3 and ISO 14443-4, the secure element being configured for selecting one of the virtual cards for communicating with a NFC, Near Field Communication, reader through a CLF, Contactless Frontend, comprised in the terminal, the secure element being configured for:
- activating the first and second virtual cards;
- provisioning the CLF with the UID, Unique Identifier, of the first virtual card;
- provisioning the CLF with the default parameters of the second virtual card, according to Amendment C of GlobalPlatform Card Specification and ETSI 102.613;
- if the CLF detects that the communication protocol used by the NFC reader is compliant with ISO 1443-3 but not compliant with ISO 14443-4, receiving from the CLF an information indicating that the communication protocol between the NFC reader and the CLF is compliant with ISO 1443-3 only;
- if the CLF detects that the communication protocol used by the NFC reader is compliant with ISO 1443-3 and compliant with ISO 14443-4, receiving from the CLF an information indicating that the communication protocol between the NFC reader and the CLF is compliant with ISO 1443-4.

The present invention will be better understood by reading the following description of a preferred embodiment of the invention that represents exchanges between the different exchanges for opening the SWP channel.

The Single Wire Protocol (SWP) is the interface between the secure element and the CLF. SWP is a method of Near Field Communication which provides an interface between the secure element and the CLF. SWP enables contactless communication between devices. First, the CLF facilitates communication between the contactless reader and the secure element, so transactions are device-specific.

The host controller interface (HCI) is a high level protocol that enables reliable data exchanges using the SWP physical layer.

The HCl enables the SWP to create a host network and support contactless applications, using the secure element.

The purpose of the invention is that the secure element pushes data to the CLF and in particular that it pushes more data in the CLF in order to avoid these perpetual exchanges between the secure element and the CLF.

On the virtual card side, in order to be compliant with the GP recommendation, it is accepted to have several virtual cards active at the same time and the invention proposes to modify the communication on the CLF side that permits to pre-configure the CLF with the UID (Unique Identifier) of the virtual card that will be used later.

The card, when utilizing Mifare, for authentication purposes, will not use the current UID, in terms of GP authentification, but will use a Mifare UID by anticipating that the fact that the CLF will use the correct UID and the reader will be the correct one, by using the Mifare UID.

Where in the prior art, six steps where necessary for performing the switch between two (or more) virtual cards, and notably a step at the level of the application processor, the invention proposes that the CLF detects that it is a Mifare authentication protocol and that is has not the complete ISO 4043 (Version 3 but not the Version 4), in the RF exchange between the CLF. It can detect that it is not a Mifare reader and not a HCI frame and not a banking reader for example.

More precisely, the invention proposes to activate the first and second virtual cards by the secure element. Both virtual cards will then able to communicate with the reader when the device will be in the communication field of the device.

The secure element also provisions the CLF with:
- the UID of the first virtual card (the first virtual card is compliant with ISO 14443-3);
   the default parameters of the second virtual card, according to Amendment C of GlobalPlatform Card Specification and ETSI 102.613 (the second virtual card is compliant with ISO 14443-3 and ISO 14443-4). Regarding the ETSI standard, one may refer to "ETSI TS 102 613 V7.0.0 (2007-11) Technical Specification Smart Cards; UICC - Contactless Front-end (CLF) Interface; Part 1: Physical and data link layer characteristics (Release 7)".

Then, when the device enters in the field of the NFC reader:
- if the CLF detects that the communication protocol used by the NFC reader is compliant with ISO 1443-3 but not compliant with ISO 14443-4, the CLF uses the UID of the first virtual card (Mifare card), in order to establish a communication between the first virtual card and the NFC reader. This corresponds to a switch.
- if the CLF detects that the communication protocol used by the NFC reader is compliant with ISO 1443-3 and compliant with ISO 14443-4, the CLF keeps the default parameters of the second virtual card stored in the CLF, in order to establish a communication between the second virtual card and the NFC reader.

So, there is a first setup step consisting in activating both virtual cards:
The CLF records the UIDs of the first and second virtual cards. The first card VCM is installed with mask '00' and the second card is installed with its mask. After that, both virtual cards are activated.

The second step is performed during the use of the virtual cards: The CLF performs the authentication of the first virtual card (Mifare) and, if it works, uses this first card for the transactions with the reader. If it does not work, the CLF switches to the second card and performs contactless transactions by using the second virtual card's UID.

In both cases, the CLF informs the secure element of the protocol(s) used for communicating with the reader.

In summary, the invention consists in reuse the UID in the application layer. So when a user has several cards (virtual cards) in the same device, all the cards will respond at the same time as the invention allows to know how to differentiate them.

The secure element can be one of:
- a Sim card,
- a UICC,
- an eUICC,
- an iUICC,
- an eSE.

The invention also concerns a secure element cooperating with a terminal, the secure element comprising two virtual cards, a first of the virtual cards compliant with ISO 14443-3 and a second virtual card being compliant with ISO 14443-3 and ISO 14443-4, the secure element being configured for selecting one of the virtual cards for communicating with a NFC, Near Field Communication, reader through a CLF, Contactless Frontend, comprised in the terminal, the secure element being configured for:
- activating the first and second virtual cards;
- provisioning the CLF with the UID, Unique Identifier, of the first virtual card;
- provisioning the CLF with the default parameters of the second virtual card, according to Amendment C of GlobalPlatform Card Specification and ETSI 102.613;
- if the CLF detects that the communication protocol used by the NFC reader is compliant with ISO 1443-3 but not compliant with ISO 14443-4, receiving from the CLF an information indicating that the communication protocol between the NFC reader and the CLF is compliant with ISO 1443-3 only;
- if the CLF detects that the communication protocol used by the NFC reader is compliant with ISO 1443-3 and compliant with ISO 14443-4, receiving from the CLF an information indicating that the communication protocol between the NFC reader and the CLF is compliant with ISO 1443-4.

The advantages of the invention are:
- compliance with the recommendations of EMVCO, it allows to continue to remain completely standard, especially regarding GlobalPlatform;
- the proposed scheme is easy to implement in any secure element without any change in standard;
- better user experience: Switch is done transparently without any manual action;
- no need of:
   ∘ Operations/commands to deactivate/activate the virtual cards;
   ∘ Transfer of RF parameters from secure element to the CLF during switching;
- the transaction from secure element perspective is faster.

## Claims

1. A method for selecting a virtual card among two virtual cards comprised in a secure element cooperating with a terminal, a first of said virtual cards being compliant with ISO 14443-3 and the second virtual card being compliant with ISO 14443-3 and ISO 14443-4, said secure element communicating with a NFC, Near Field Communication, reader through a CLF, Contactless Frontend, comprised in said terminal, said method comprising:
- activating said first and second virtual cards by said secure element;
- provisioning by said secure element said CLF with the UID, Unique Identifier, of said first virtual card;
- provisioning by said secure element said CLF with the default parameters of said second virtual card, according to Amendment C of GlobalPlatform Card Specification and ETSI 102.613;
- if said CLF detects that the communication protocol used by said NFC reader is compliant with ISO 1443-3 but not compliant with ISO 14443-4, switching said CLF to the UID of said first virtual card, in order to establish a communication between said first virtual card and said NFC reader;
- if said CLF detects that the communication protocol used by said NFC reader is compliant with ISO 1443-3 and compliant with ISO 14443-4, keeping said default parameters of said second virtual card in said CLF, in order to establish a communication between said second virtual card and said NFC reader.

2. A method according to claim 1, wherein said secure element is one of:
- a Sim card,
- a UICC,
- an eUICC,
- an iUICC,
- an eSE.

3. A secure element cooperating with a terminal, said secure element comprising two virtual cards, a first of said virtual cards compliant with ISO 14443-3 and a second virtual card being compliant with ISO 14443-3 and ISO 14443-4, said secure element being configured for selecting one of said virtual cards for communicating with a NFC, Near Field Communication, reader through a CLF, Contactless Frontend, comprised in said terminal, said secure element being configured for:
- activating said first and second virtual cards;
- provisioning said CLF with the UID, Unique Identifier, of said first virtual card;
- provisioning said CLF with the default parameters of said second virtual card, according to Amendment C of GlobalPlatform Card Specification and ETSI 102.613;
- if said CLF detects that the communication protocol used by said NFC reader is compliant with ISO 1443-3 but not compliant with ISO 14443-4, receiving from said CLF an information indicating that the communication protocol between said NFC reader and said CLF is compliant with ISO 1443-3 only;
- if said CLF detects that the communication protocol used by said NFC reader is compliant with ISO 1443-3 and compliant with ISO 14443-4, receiving from said CLF an information indicating that the communication protocol between said NFC reader and said CLF is compliant with ISO 1443-4.

4. A secure element according to claim 3, wherein it is one of:
- a Sim card,
- a UICC,
- an eUICC,
- an iUICC,
- an eSE.
